(19)

**Europäisches Patentamt**

**European Patent Office**

**Office européen des brevets**

(11) **EP 3 275 124 B1**

(12) **EUROPEAN PATENT SPECIFICATION**

(45) Date of publication and mention of the grant of the patent:
**17.07.2019 Bulletin 2019/29**

(51) Int Cl.:
***H04L 12/24*** *(2006.01)* ***H04L 12/26*** *(2006.01)*
***H04L 12/851*** *(2013.01)*

(21) Application number: **16708732.9**

(22) Date of filing: **02.03.2016**

(86) International application number:
**PCT/IB2016/051147**

(87) International publication number:
**WO 2016/151419 (29.09.2016 Gazette 2016/39)**

(54) **NETWORK TRAFFIC CLASSIFICATION**

NETZWERKVERKEHRSKLASSIFIZIERUNG

CLASSIFICATION DE TRAFIC RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2015 US 201514667701**

(43) Date of publication of application:
**31.01.2018 Bulletin 2018/05**

(73) Proprietor: **Cisco Technology, Inc.**
**San Jose, CA 95134-1706 (US)**

(72) Inventors:
• **FENOGLIO, Enzo**
  **92130 Issy-les-Moulineaux (FR)**
• **SURCOUF, Andre**
  **95320 Saint Leu La Foret (FR)**
• **FRIEL, Joseph**
  **Ardmore, Pennsylvania 19003 (US)**
• **LATAPIE, Hugo**
  **Long Beach, California 90803 (US)**
• **STALKER, Altan**
  **Lawrenceville, Georgia 30043 (US)**

• **COSTELLO, Michael**
  **Crowthorne**
  **Berkshire RG45 6DW (GB)**

(74) Representative: **Kazi, Ilya et al**
**Mathys & Squire LLP**
**The Shard**
**32 London Bridge Street**
**London SE1 9SG (GB)**

(56) References cited:
**EP-A1- 2 262 173** **CN-A- 102 394 827**
**US-A1- 2010 217 886**

• **DARIO ROSSI ET AL: "Fine-grained traffic classification with netflow data", 2010 INTERNATINOAL WIRELESS COMMUNICATIONS AND MOBILE COMPUTING CONFERENCE (IWCMC 2010); JUNE 28-JULY 2, 2010; CAEN, FRANCE., 1 January 2010 (2010-01-01), page 479, XP055275785, Chichester DOI: 10.1145/1815396.1815507 ISBN: 978-1-4503-0062-9**

**Description**

FIELD OF THE INVENTION

The present disclosure generally relates to the classification of data streams using behavioral methods.

BACKGROUND OF THE INVENTION

Internet service providers (ISPs) typically attempt to classify at least some of the data traffic supported by their networks. Traffic classification enables an ISP to prioritize or deprioritize network traffic (based on service tiers, net neutrality, etc.), as well as to identify malicious traffic (e.g., worms) and/or identify potentially illegal traffic (e.g., copyright violations). Currently, most traffic classification in ISP networks is performed using Deep Packet Inspection (DPI). In DPI, the data payload of the packet is inspected and searched for patterns that match known character strings from a continuously updated database of identifiers. Accordingly, DPI is only appropriate for the classification of non- encrypted traffic. However, the percentage of encrypted traffic in ISP networks is increasing, thereby impacting on the use of deep packet inspection (DPI) to classify such traffic.

EP 2262173 discloses a network management system in which network flow information is obtained from network management probes and application traffic profile information is obtained from a source database. The network flow information and the application traffic profile information are correlated. Based on the correlation results, traffic policy rules are generated and installed in network elements via network management signals. CN 102394827 discloses a hierarchical classification method for internet flow, wherein: firstly, coarse grained classification is conducted using a flow statistical property method based on machine learning for classifying network flow, the network flow is divided into applied categories with different characteristics, if the flow distinguished by the coarse grained classification needs to be used, the flow can be output directly, and if the flow needs further classification, next step is conducted in which fine grained classification is conducted on the applied categories distinguished by the coarse grained classification. US 2010/217886 discloses a method of identifying packets associated with a data stream, where the method may also include updating a set of characterization data associated with the data stream based on information associated with a packet. An article entitled "Fine-grained traffic classification with netflow data" by Dario Rossi, et al, published at the 2010 International Wireless Communications and Mobile Computing Conference, page 479, discloses a behavioral algorithm which exploits Netflow records for traffic classification using a classifier that identifies an application by means of simple counts of received packets and bytes.

BRIEF DESCRIPTION OF THE DRAWINGS

The present invention will be understood and appreciated more fully from the following detailed description, taken in conjunction with the drawings in which:

Figs. 1A and 1B are time sequence graphs of typical video flows.
Fig. 2 is a simplified pictorial illustration of an ISP's intelligent video network, constructed and operative in accordance with embodiments of the present invention;
Figs. 3, 4 and 7 are flowcharts of processes to be performed by components of the network of Fig. 2;
Figs 5A-L are histograms based on features of video flows; and
Fig. 6 is an illustration of application clusters in embedded space.

DESCRIPTION OF EXAMPLE EMBODIMENTS

**Overview**

The invention is defined by a method according to claim 1 and a computing device according to claim 8.
Further embodiments are defined by the dependent claims.

**Detailed description of example embodiments**

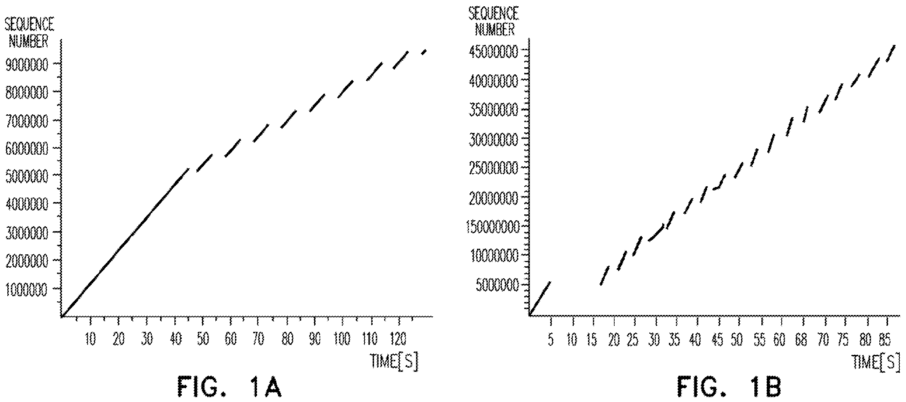

The inventors of the present invention have realized that Over The Top (OTT) video flows, such as provided by Netflix and YouTube, may be particularly suitable for classification by shallow packet inspection (SPI) methods that do not require inspection of data payloads and are therefore not impacted by encryption. OTT video flows are typically persistent (compared to typical web traffic) - a movie may last for hours. During that time, the flows are also fairly similar and predictable. By way of illustration, Figs. 1A and IB, to which reference is now made, respectively show time sequence graphs of video flows from Netflix (Fig. 1A) and YouTube (Fig. IB), indicating received bytes over time. These graphs show the characteristic pattern of Adaptive Bit Rate (ABR) video - an initial continuous burst to pre-fill a playback buffer, followed by intermittent "chunks" of data to refresh the buffer over time. It may therefore be possible to leverage the persistence and self-similarity of OTT video flows to identify and classify them as such using SPI - even if they are encrypted.

It will be appreciated by one of skill in the art that OTT video is currently the dominant type of traffic in Internet service provider (ISP) networks. Typically, up to 60% of downstream traffic is OTT video. Furthermore, the percentage of OTT video in downstream traffic has been growing and is believed by the inventors of the present invention to be likely to continue to grow. Accordingly, a method for classifying encrypted OTT video may enable an ISP to classify a significant portion of all of its network traffic, regardless of whether or not it is encrypted.

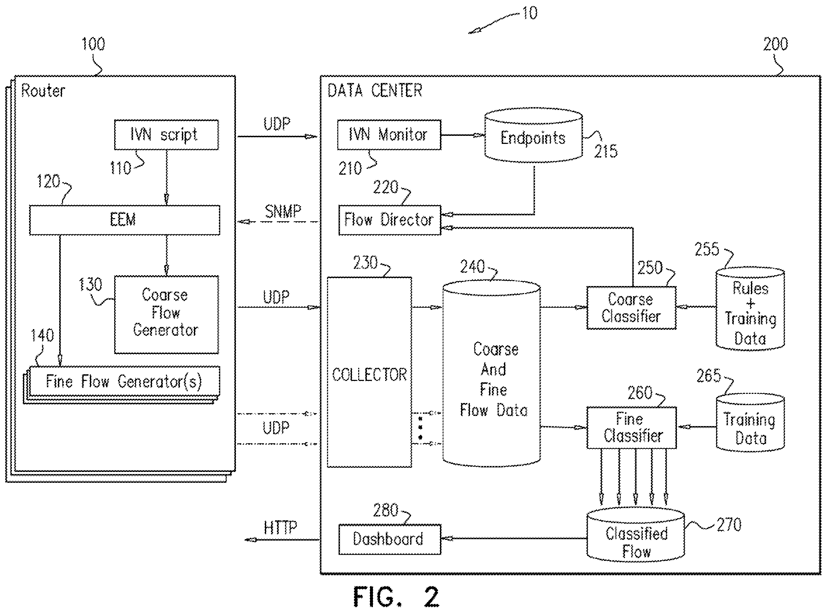

Reference is now made to Fig. 2 which illustrates an intelligent video network (IVN) 10, constructed and operative in accordance with embodiments of the present disclosure. Network 10 comprises a multiplicity of routers 100 in communication with data center 200. Each router 100 comprises IVN script 110, embedded event manager (EEM) 120, coarse flow generator 130 and a multiplicity of fine flow generators 140. Data center 200 comprises IVN monitor 210, endpoints database 215, flow director 220, collector 230, coarse and fine flow data database 240, coarse classifier 250, rules and training database 255, fine classifier 260, training database 265, classified flows database 270 and dashboard 280.

It will be appreciated by one of skill in the art that both routers 100 and data center 200 may comprise other functional components that in the interests of clarity are not shown in Fig. 2. For example, routers 100 may comprise other functionality for the routing of data over network 10; data center 200 may comprise other functionality for the management and control of data in network 10. It will similarly be appreciated that some or all of the components of routers 100, such as EEM 120 coarse flow generator 130 and/or fine flow generators 140 may be implemented in software and/or hardware, and that routers 100 may also comprise one or more processors (not shown) operative to execute software components. Some of the components of data center 200, such as IVN monitor 210, flow director 220, collector 230, coarse classifier 250, fine classifier 260, and dashboard 280 may be implemented in software and/or hardware. Data center 200 may also comprise one or more processors (not shown) operative to execute software components.

EEM 120 may be operative to instruct coarse flow generator 130 and fine flow generator 140 to generate network flow data for provision to data center 200. Coarse flow generator 130 may be configured to generate coarse flow data based on low frequency analysis of data flows sampled by router 100. Fine flow generator 140 may be configured to generate coarse flow data based on high frequency analysis of data flows sampled by router 100.

In accordance with embodiments of the present disclosure, the functionality of routers 100 may be provided by leveraging currently existing network technology adding additional hardware to network 10. For example, IVN script 110, EEM 120, coarse flow generator 130 and fine flow generator 140 may be implemented using existing, commercially available, traditional and flexible versions of Cisco IOS NetFlow. NetFlow classifies network packets into "flows" and summarizes characteristics of these flows. The original version of NetFlow, now referred to as traditional NetFlow, classifies flows based on a fixed set of seven key fields: source IP, destination IP, source port, destination port, protocol type, type of service (ToS) and logical interface. Traditional NetFlow's flow characteristics, such as total bytes and total packets, are (generally speaking) based on the lifetime of the flow or a one minute sample. The data retrieved is highly generalized and therefore appropriate for low frequency analysis without requiring added processing downstream. Accordingly, coarse flow generator 130 may be implemented using traditional NetFlow per a suitably configured IVN script 110 input to EEM 120.

Flexible NetFlow supports many additional features including shorter sample periods and configurable key fields to define flows. With support for configurable key fields, a flow may be defined by criteria other than the seven key fields used by traditional NetFlow. Accordingly, new combinations of packet fields may be used to classify packets into unique flows that may have little resemblance to those created by traditional NetFlow. In accordance with embodiments of the present disclosure, a sequence approach may be used with flexible NetFlow to capture details on an almost per-packet level as opposed to the typical generalization provided by traditional NetFlow. The sequence approach is predicated on including the TCP sequence number as a key. With the TCP sequence number included as a key, most packets (except for retransmits) will be treated as unique flows since the overall combination of key fields (source IP, destination IP, source port, destination port, TCP sequence number, and others) typically creates a unique combination for each packet. The resulting flows will therefore typically represent a single packet, causing flexible Net flow's flow summary to accurately report per packet details including reception time and packet length, thereby providing high frequency analysis. Accordingly, fine flow generator 140 may be implemented using flexible NetFlow per a suitably configured IVN script 110 input to EEM 120. In order to provide per-packet details for a video flow, fine flow generator 140 may therefore generate a series of summary reports, one for every packet in the sample population.

It will be appreciated by one of skill in the art that since this sequence approach may generate a significant amount of data, it may be appropriate for shorter durations, i.e. less than one second, with an appropriately sized cache to ensure that the collection process has acceptable impact on the IOS device. It will similarly be appreciated by one of skill in the art, that the present disclosure is not limited solely to using NetFlow to implement the functionality of routers 100. Any other known product or service providing generally the same functionality may also be used. Alternatively, or in addition, additional software and/or hardware components may be added as necessary to an existing router 100 and/or data center 200 to provide the data collection and analysis provided by NetFlow.

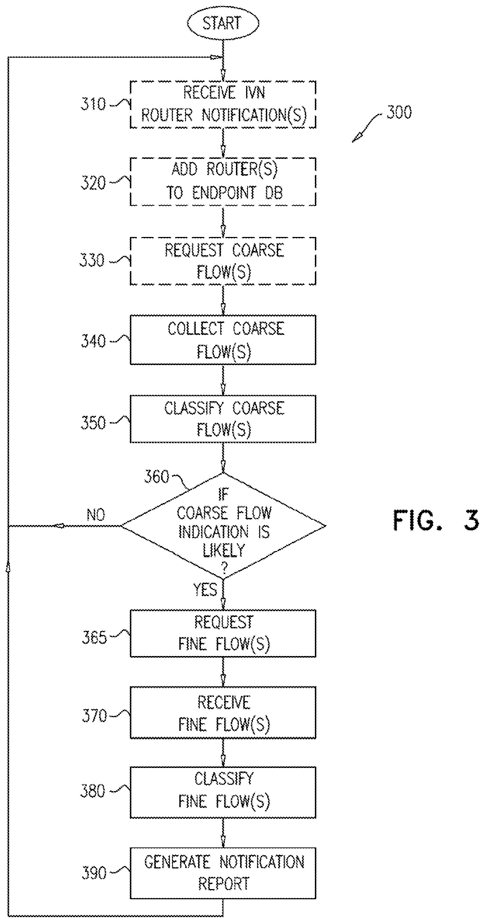

Reference is now made to Fig. 3 which illustrates a network data flow classification process 300 to be performed by data center 200 in communication with routers 100. IVN monitor 210 may receive (step 310) one or more router notifications from router(s) 100. Such router notifications may be generated by IVN script 110 to notify data center 200 that the associated router 100 is configured to participate in process 300. Routers 100 may forward these notifications to IVN monitor 210 using any suitable method. For example, the IVN script may be configured at installation to know the addressable location of IVN monitor 210 and communicate using UDP. It will be appreciated, however, that other discovery/communication mechanisms may be similarly suitable. Based on these notifications, IVN monitor 210 may add (step 320) participating routers 100 to endpoints database 215.

Flow director 220 is operative to maintain proper operation of IVN data flows from Routers 100. It may use SNMP to request (step 330) that specific routers 100 initiate coarse flow generation per the participating routers 100 in endpoint database 215. It will be appreciated that steps 310 - 330 may not necessarily be performed each time the processing loop of process 300 is executed. For example, for any given execution of the processing loop, there may be no new notifications to be received in step 310.

Collector 230 may collect (step 340) coarse flow data forwarded from router 100 and save them in coarse and fine flow database 240. The coarse flow data may represent short aggregated summaries of a sampling of all of the flow data on router 100. Alternatively, coarse flow generator 230 may be implemented to filter out data for flows that are unlikely to be video flows. For example, very short data flows may be excluded on the assumption that they are not video flows. Such filtering may be implemented by controlling and configuring flexible Net-Flow functionality by IVN script 110 for the generation of the coarse flow by coarse flow generator 130. It will be appreciated that the coarse flow data is generated by coarse flow generator 130 and forwarded to data center 200 using UDP. It will be appreciated by one of skill in the art that other transport protocols may be similarly suitable to implement this functionality.

Coarse classifier 250 may classify (step 350) coarse flows retrieved from coarse and fine flow database 140 in accordance with previously defined rules and/or training data in rules and training database 255. The rules in rules and training database 255 may be defined in accordance with heuristic analysis of how different media services may operate their platform. Analysis of OTT sessions from real service providers may yield features such as audio/video bitrates, chunks gaps and buffer sizes.

For example, per recent analysis, Netflix may generally use one of two inter-chunk packet gaps and only one audio bitrate. Reasonable confidence that this analysis is correct may rely on the fact that some findings may be associated with a limited set of values. For example, audio bitrates are normally 64, 128, 192, 256, etc. and inter-chunk packet gaps are normally integer values. Assuming such values are correct, further assumptions may be made regarding the correctness of other derived values (e.g. video bitrates) as well. Tests using this approach in a limited number of network environments have yielded results with identification success rates exceeding 98%. However, it will be appreciated by one of skill in the art that in a real-world environment, such an approach may underperform such results since it may be difficult to heuristically learn and adapt to changes in provider services and ambient network conditions.

If as per step 350 it is likely that the coarse flow represents a video flow (step 360), coarse classifier 250 will instruct flow director 220 to request (step 365) fine flows to be generated by router 100. Otherwise, control may return to the start of process 300.

Collector 230 may receive (step 370) the associated fine flows from router 100 and store them in coarse and fine flow database 240. It will be appreciated that, as discussed hereinabove, the fine flow data is generated by fine flow generators 140. It will be appreciated that at any one time there may be more than one active video flow candidate on router 100; an instance of fine flow generator 140 may be executed for each active video flow candidate. The fine flow data comprises more finely grained information than coarse flow data. For example, timestamp and packet size may be captured for all messages in a short time window (e.g., 250 ms) for forwarding to collector 230. It will be appreciated that such high resolution sampling may be resource intensive and accordingly the sampling time window may be relatively short, and flow director 220 may limit such requests to limit overhead for network 10.

Fine classifier 260 may classify (step 380) fine flows retrieved from coarse and fine flow database 240 according to provider (e.g. Netflix, YouTube, etc.) per training data in training database 265. The results of step 380 may be stored in classified flow database 270. Dashboard 280 may use the data from classified flows database 270 to generate (step 390) a notification report for the classified fine flows. In accordance with some embodiments of the present application, the notification report may be presented on an operator's online console or dashboard. Alternatively, or in addition, the notification report may be stored electronically for future reference. Alternatively, or in addition, the notification report may be forwarded via email and/or other suitable vehicle for input to online and/or offline review and/or control processes.

It will be appreciated by one of skill in the art that such a notification report, in any of its possible forms, may serve as input to processes for the management of network 10. For example, video flows as detected by process 300 may be assigned a different priority than other data flows in network 10. A higher or lower priority level may be assigned to video flows in general, based on technical and/or functional considerations. Routers 100 may be instructed by data center 200 to prioritize video flows in relation to other data flows based on such a priority level. Classified video flows may also be assigned different priorities according to video service provider. The different priorities may be based on technical and/or functional considerations, and routers 100 may thereby also be instructed to discriminate between video flows according to video service provider.

In accordance with embodiments of the present disclosure, manifold learning diffusion maps may be used to implement coarse classifier 250 and/or fine classifier 260. A manifold is a space in which every point has a neighborhood which locally resembles the Euclidean space, but in which the global structure may be more complicated, e.g. the earth surface can be assumed locally flat but globally is a two dimensional manifold embedded in a three dimensional space.

Manifold learning is a formal framework for many different machine learning techniques based on the assumption that the original data actually exists on a lower dimensional manifold embedded in a high dimensional ambient space (manifold assumption) and that data distributions show natural clusters separated by regions of low density (cluster assumption) The underlying geometric structure of the data may therefore be discovered given the high dimensional observations. The input data may be defined in a high dimensional ambient space, using fewer parameters while preserving relevant information and the intrinsic semantic of the source dataset; dimensionality reduction techniques are used to transform dataset X with dimensionality D into a new dataset Y with dimensionality d, while retaining the geometry of the data.

Diffusion Maps is a manifold learning methodology that preserves the local similarity of the high dimensional dataset constructing the low dimensional representation for the underlying unknown manifold using non-linear techniques based on graph theory and differential geometry. The distance between two data points is estimated via a fictive diffusion process simulated with a Markov random walk on the associated undirected graph that approximates the manifold.

The Euclidean distance between points in the embedded space (the transformed space) is approximately the diffusion distance between those points in the ambient space (the original space). Variation of physical parameters along the original manifold is approximately preserved in the new data space as long as the Euclidean distances are preserved.

Accordingly, taking two data points $x_i$ and $x_j$ in a high dimensional ambient space, a local similarity matrix W may be defined to reflect the degree to which points are near to one another. Imagining a random walk starting at $x_i$ that moves to the points immediately adjacent, the number of steps it takes for that walk to reach $x_j$ reflects the distance between $x_i$ and $x_j$ along the given direction. The similarity of the data in the context of this fictive diffusion process is retained in a low-dimensional non-linear parameterization useful for uncovering the relations within the feature space. Moreover, the embedding may be robust to random noise in the data as long as the points in the ambient space keep their relatedness to adjacent points in presence of noise.

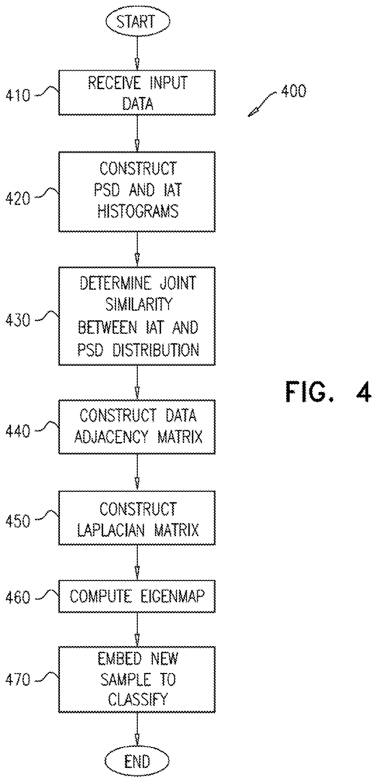

Reference is now made to Fig.4 which illustrates a diffusion map learning process 400 to be performed by coarse classifier 250 and/or fine classifier 260 in accordance with embodiments of the present disclosure to generate training data and/or to process input data flows received from routers 100. Process 400 employs a combination of graph-theory and differential geometry. The elements of a subject dataset are related to each other in a structured manner through similarities or dependencies between the data elements represented with an undirected weighted graph, in which the data elements correspond to nodes, the relation between elements are represented by edges, and the strength or significance of relations is reflected by the edge weights.

In the interests of simplicity of reference, process 400 will be discussed hereinbelow as performed by fine classifier 260. It will be appreciated that process 400 may be performed by either or both of coarse classifier 250 and fine classifier 260. Alternatively, or in addition, a dedicated training module may be used to generate the training data. Fine classifier 260 receives (step 410) input data. When executed in training mode, the input data represents capture of labeled video streaming services samples. In operation, the input data is received as either coarse flow or fine flow data from routers 100.

It will be appreciated by one of skill in the art that video network traffic may be described by a number of observable data or feature vectors that are the points $\{x_i\}^N_{i=1}$ in the high dimensional ambient space. A feature may be indicative of the type of application that generated the traffic based on the statistical characteristics of the application protocols but without using the information of payloads that may be encrypted. Classifiers 250 and 260 are trained to associate the sets of features with known video streaming services, and to apply the trained classifier to classify unknown traffic using the previously learned rules.

It has been observed that different applications have generally distinct packet size distributions (PSDs) and that the same applications generally have similar packet inter-arrival times (IATs). Process 300 may therefore use PSDs and IATs as indicators for application classification. The PSD of an application can be obtained from observation of relevant TCP connections. For training, the traces of each application may be generated manually and recorded in coarse and fine flow data database 240. Such manual generation, typical of supervised classification methods, provides the advantage to build a consistent ground-truth dataset in which each application that generated a given flow is well known. Alternatively, it is possible to use a mix of labeled and unlabeled sample typical of semi-supervised classification methods.

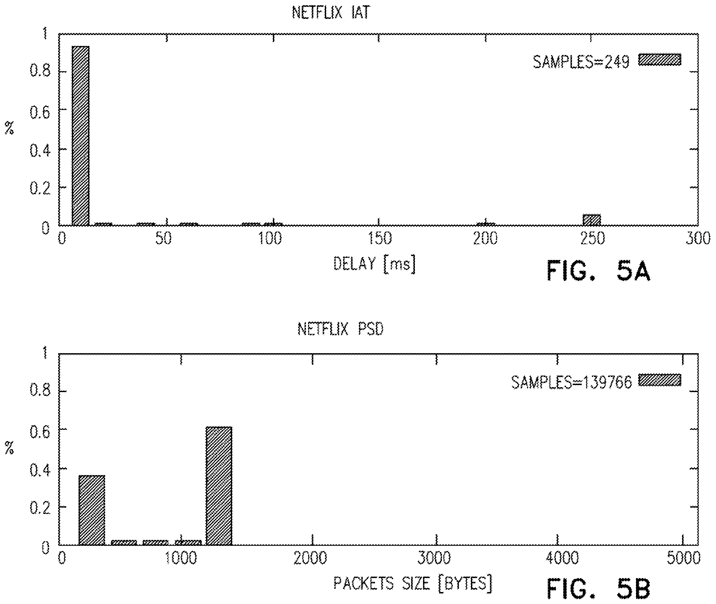

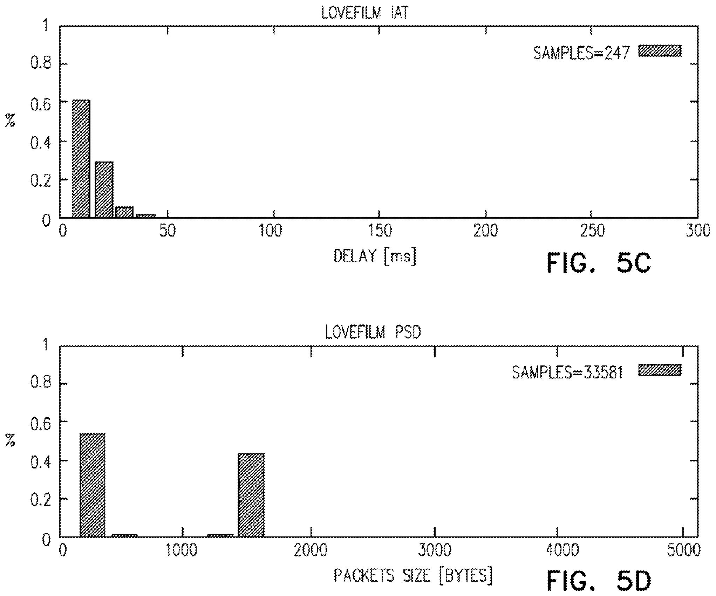

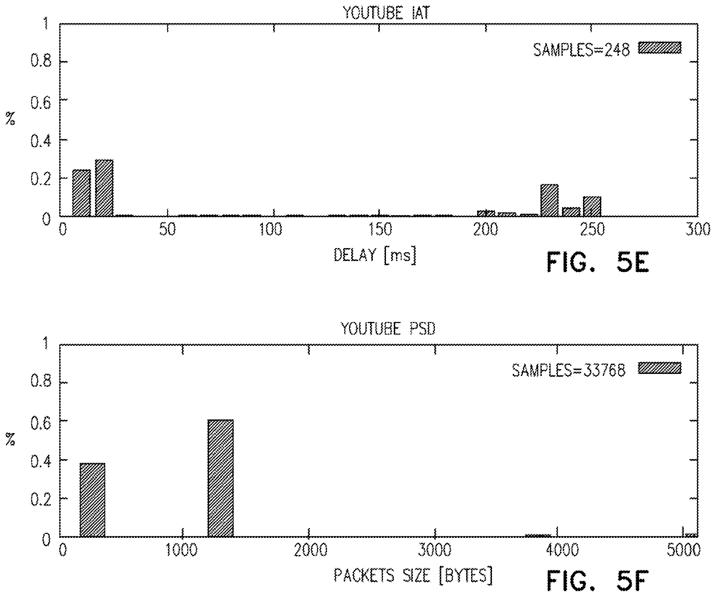

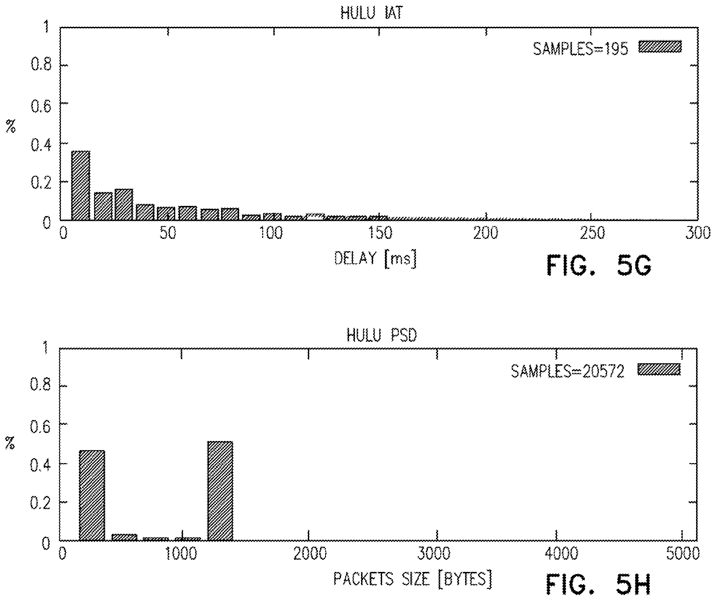

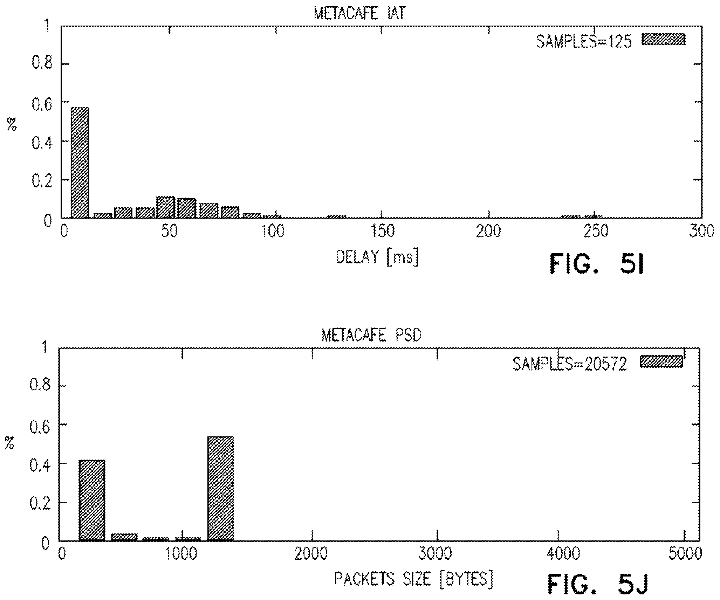

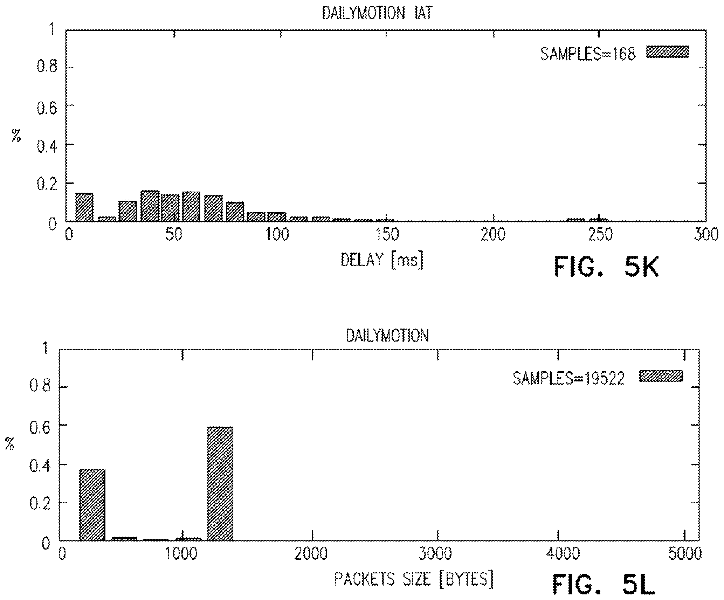

In accordance with an exemplary implementation of process 400, the generated data may be based on an average capture duration of approximately 240 seconds from video streaming traffic service such as, for example, Netflix, Lovefilm, YouTube, Hulu, Metacafe and Dailymotion. Examples of PSD histograms generated for each of these video streaming services may be seen in Figs. 5B, 5D, 5F, 5H, 5J and 5L, to which reference is now briefly made.

It will be appreciated by one of skill in the art that a transport layer protocol such as TCP may be responsible for the reliable and inline delivery of data packets between two communicating applications. The inter-arrival time between two consecutive packets of a network flow transmitted by a host may be determined by a function of at least the application traffic generation rate, the transport layer protocol in use, queuing delays at the host and on the intermediate nodes in the network, the medium access protocol, and finally a random amount of jitter. In accordance with an exemplary implementation of process 400, the IAT histograms may also be based on an average capture duration of approximately 240 seconds from video streaming traffic service such as, for example, Netflix, Lovefilm, YouTube, Hulu, Metacafe and Dailymotion. Examples of IAT histograms generated for each of these video streaming services may be seen in Figs. 5A, 5C, 5E, 5G, 5I and 5K, to which reference is now briefly made.

For each sample point, fine classifier 260 may construct (step 420) a corresponding histogram for the PSD and the average IAT to capture the overall statistical traffic behavior. Each histogram may be represented as a point in the feature space.

It will, however, be appreciated by one of ordinary skill in the art that using a single feature for classification may be insufficient; it is not unlikely that two different applications may have similar PSD or IAT. For example, as shown in Figs, 5B, 5H, 5J and 5L, while not identical, the PSD histograms for NetFlix, Hulu, Metacafe and Dailymotion are fairly similar. Accordingly, process 400 may be configured to use two or more features.

Fine classifier 260 may therefore be configured to determine (step 430) joint similarity between PSD and IAT distribution. In accordance with embodiments of the present disclosure, manifold alignment methods may be employed by fine classifier to create a more powerful representation of the manifold, aligning (combining) multiple datasets into a fusion multi-kernel support. Manifold alignment views each individual dataset as belonging to a larger dataset. Accordingly, since the datasets may have the same manifold structure, the Laplacian associated with each dataset are all discrete approximations of the same manifold that can be combined into a joint Laplacian to construct an embedding that integrates features provided by the different datasets. Accordingly, the fusion multi-kernel of the kernels $W_{IAT\ and}\ W_{PSD}$ for IAT and PSD distributions in their respective feature space may be derived as a Bhattacharyya kernel according to:

$$W_{IVN} = \sqrt{W_{IAT}}\ \sqrt{W}_{PSD,}$$

such that the fusion multi-kernel $W_{IVN}$ is a measure of joint similarity between IAT and PSD distributions.

The $W_{IVN}$ dataset may be represented in an N×D matrix consisting of N feature vectors with dimensionality D. Each instance is represented as a point in the ambient space $\mathbb{R}^D$ and $s(x_i,\ x_j)$ represents the distance between a pair of adjacent data points. In accordance with embodiments of the present invention, the Jensen-Shannon divergence (JSD) may be used to measure the distance $s(x_i,\ x_j)$. It will be appreciated that any other suitable method may also be used in other embodiments Fine classifier 260 may construct (step 440) a data adjacency matrix **W**, on a weighted undirected graph for the observed data $\{x_i\}^N{}_i=1$ where the elements $W(x_i,\ x_j)$ of the symmetric matrix **W are** defined by the Gaussian kernel:

$$W(x_i,\ x_j) = \exp\left(-\frac{JSD(xi,xj)}{\sigma^2}\right)$$

Fine classifier 160 may construct (step 450) the Laplacian Matrix **L**, for

$$D(x_i,\ x_j) = \sum_j (x_i,\ x_j)\ and\ set\ L=D-W.$$

Fine classifier 160 may then compute (step 460) the Eigenmap that solves the generalized eigenvalue problem $L\ \psi = \lambda D\psi$ for the symmetric Laplacian $P = D^{-1/2}\ L\ D^{-1/2}$ with eigenvalues $1 = \lambda_0 > \lambda_1 \cdots > \lambda_N$ and eigenvectors $\psi_0,\ \psi_0\ ...,\ \psi_N$. The resulting matrix P has all rows equals to one and can be interpreted as a stochastic matrix defining a random walk on the graph. The constant eigenvector $\psi_0$ with the top eigenvalue $\lambda_0 = 1$ may be discarded while keeping the first d dominant eigenvalues $\lambda_1 ... \lambda_d$ and eigenvectors $\psi_1 ...,\ \psi_d$. The embedding of the manifold will be then given by the vector in the embedded space $x_i \to \Psi_t(x_i) = \{\lambda^t{}_1\ \psi_1\ (x_i),...,\ \lambda\ ^t{}_d\psi_d(x^t i)\}$ where d << D is the dimension of the embedded space.

It will be appreciated that if the data points $x_i$ and $x_j$ are adjacent when measured by W, then they should similarly be very near on the manifold. Conversely, the points $\Psi_t(x_i)$ and $\Psi_t(x_j)$ are adjacent when measured in the ambient space, because the diffusion distance should be similarly small. Fine classifier 260 may embed (step 470) the results in the embedded space.

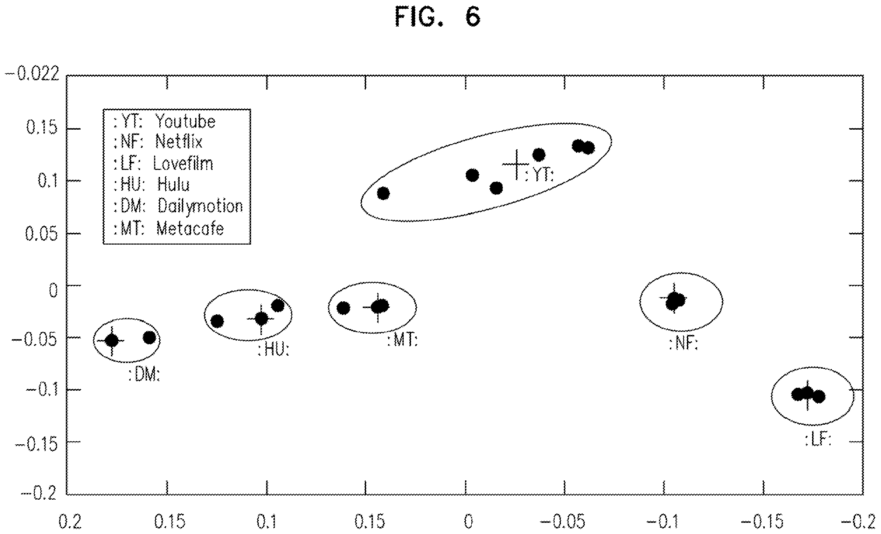

In accordance with embodiments of the present invention, classification of the training data may be performed in a supervised/semi-supervised manner. Reference is now made briefly to Fig. 6 which shows the results for twenty-five randomly chosen labeled samples of video stream flows. The application clusters obtained in the embedded space are presented for the first two dominant dimensions with diffusion parameter t=2. As labeled in Fig. 6, each of the application clusters represents a video flow from a different video stream service provider.

Once the clusters have been computed in the embedded space using the labeled samples, a new unlabeled sample may be added to the training set. Instead of computing a new embedded space for each new sample, Nyström extension may be used to estimate the extended eigenvector in the previous embedded space. It will be appreciated that the same method may be employed for processing data flows in operation.

The classification of an unlabeled sample uses weighted neighborhoods schemes such as random forest or k-NN (k-nearest neighbor) algorithms to count the number of training points of the same class within the minimal distance from the centroids. For illustration, the crosses in the circled application clusters in Fig. 6 represent the centroids. The unlabeled sample may be classified in accordance with its proximity to a centroid.

In accordance with embodiments of the present disclosure, alternatively or in addition, deep learning techniques may be used to implement coarse classifier 250 and/or fine classifier 260. Deep learning may be characterized as machine learning techniques that receive raw data as input and automatically generate optimal feature extractors. Any suitable deep learning technique that includes generative models representing a deeper model of the structure underlying the data may be used to implement coarse classifier 150 and/or fine classifier 260. Nonlimiting examples of such implementation include denoising auto-encoders, restricted Boltzmann machines and convolutional networks.

In accordance with embodiments of the present disclosure, coarse classifier 250 may be implemented by modeling the types of system noise and affine transformations that are expected in the field and dynamically introducing simulated artifacts based on this model during system training. While this may be resource intensive during the training phase it may yield high-speed classification during operation since the classification code may consists of a few relatively simple matrix operations.

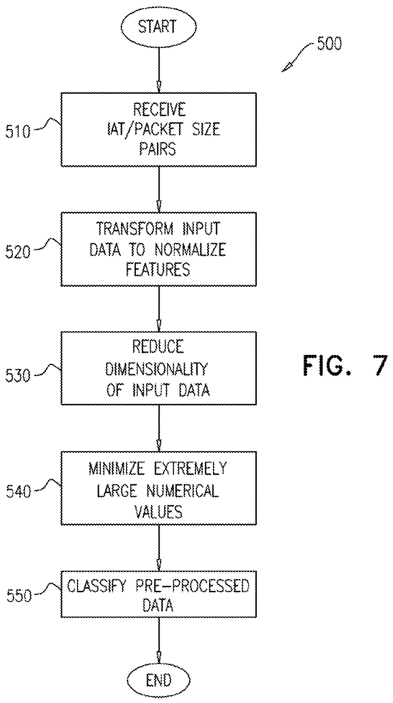

Reference is now made to Fig. 7 which illustrates deep learning classification process 500 in accordance with embodiments of the present information. In the interests of simplicity of reference, process 500 will be discussed hereinbelow as performed by coarse classifier 250. It will however be appreciated that process 500 may be performed by either or both of coarse classifier 250 and fine classifier 260.

Coarse classifier 250 may receive (step 510) vectorized IAT/PSD pairs as they are streamed into the system. Coarse classifier 250 may transform (step 520) the input data so that it has a mean of 0 and a standard deviation of 1. Coarse classifier 250 may reduce (step 530) the dimensionality of the transformed data. In accordance with embodiments of the present disclosure principle component analysis (PCA) may be used to perform step 530. However it will be appreciated that any suitable analysis may be used for step 530. The analysis may maintain a configurable amount of variance to help reduce input layer size if necessary. Whitened PCA or ZCA (zero component analysis) may be used to reduce the redundancy of the input data.

Based on a configuration parameter, coarse classifier 250 may perform regularization in order to minimize (step 540) extremely large numerical values thus helping provide numerical stability. The preprocessed data may then be classified (step 550) by the trained deep learning based classifier.

In accordance with embodiments of the present disclosure, both deep learning and manifold diffusion maps may be used in conjunction by data center 200 to perform process 300. For example, coarse classifier 250 may be implemented using deep learning, thereby taking advantage of the high-speed classification provided by deep learning for the relatively large volume of coarse flow classifications. Fine classifier 260 may be implemented using manifold diffusion maps, thereby designating the more resource intensive processing for the relatively lower volume of fine flow classifications.

It will be appreciated by one of skill in the art, that the methods described hereinabove may also be implemented to address non-video traffic. In accordance with embodiments of the present invention, the methods may be applied to the classification of any persistent network traffic based on behavioral methods to capture flow information without inspecting the packet payload or using additional hardware. For example, BitTorrent and/or Spotify traffic may be classified using generally similar methods.

It is appreciated that software components of the present invention may, if desired, be implemented in ROM (read only memory) form. The software components may, generally, be implemented in hardware, if desired, using conventional techniques. It is further appreciated that the software components may be instantiated, for example: as a computer program product or on a tangible medium. In some cases, it may be possible to instantiate the software components as a signal interpretable by an appropriate computer, although such an instantiation may be excluded in certain embodiments of the present invention.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

**Claims**

1. A method for classifying video traffic flows, implemented on a computing device and comprising:

   receiving (340) coarse flow data from a network router, wherein said coarse flow data comprises summary statistics for data flows on said router; classifying (350) said summary statistics to detect video flows from among said data flows; requesting (365) fine flow data from said network router for each of said detected video flows, wherein said fine flow data comprises timestamp and packet size on a per packet basis; receiving (370) said fine flow data from said network router; classifying (390) each of said detected video flows per video service provider in accordance with said information, wherein the classifying of said detected video flows is based on joint similarity between packet size distributions and packet inter-arrival times; assigning to said detected video flows different priority levels according to the video service provider; and instructing said network router to prioritize said detected video flows vis-a-vis other data flows in accordance with said priority levels.

2. The method according to claim 1 and further comprising using deep learning analysis to classify at least one of: said summary statistics and said detected video flows and/or further comprising using manifold learning and diffusion maps to classify at least one of: said summary statistics and said detected video flows.

3. The method according to any of claims 1 - 2 wherein:

said summary statistics are classified using deep learning analysis; and said detected video flows are classified using manifold learning and diffusion maps.

4. The method according to any of claims 1 - 3 wherein said summary statistics are based on the shorter of one minute or the length of an entire said data flow.

5. The method according to any of claims 1 - 4 and further comprising:

producing a ground-truth dataset by manually generating samples of said information, wherein said generated samples are representative of said video service provider: projecting said generated samples in embedded space to form embedded samples; identifying application clusters based on said embedded samples; projecting a new unlabeled sample in said embedded space; and using at least one of a random forest or k-NN (k-nearest neighbor) algorithm to classify said new unlabeled sample in accordance with its proximity to a centroid for one of said application clusters.

6. The method according to any of claims 1 - 5 wherein said information comprises at least a feature vector using at least one of the following traffic flow properties: total bytes, total packets, or flow duration.

7. The method according to any of the preceding claims wherein said video flows are encrypted.

8. A computing device (200) comprising:
at least one processor configured to perform all steps according to the method of any one of the preceding claims.

**Patentansprüche**

1. Ein Verfahren zum Klassifizieren von Videoverkehrsströmen, das auf einer Computervorrichtung implementiert wird und Folgendes beinhaltet:

Empfangen (340) von Grobstromdaten von einem Netzwerkrouter, wobei die genannten Grobstromdaten summarische Statistiken für Datenströme auf dem genannten Router beinhalten; Klassifizieren (350) der genannten summarischen Statistiken, um von den genannten Datenströmen Videoströme zu detektieren; Anfordern (365) von Feinstromdaten von dem genannten Netzwerkrouter für jeden der genannten detektierten Videoströme, wobei die genannten Feinstromdaten Zeitstempel und Paketgröße auf einer Pro-Paket-Basis beinhalten; Empfangen (370) der genannten Feinstromdaten von dem genannten Netzwerkrouter; Klassifizieren (390) von jedem der genannten detektierten Videoströme pro Videodienstanbieter in Übereinstimmung mit den genannten Informationen, wobei das Klassifizieren der genannten detektierten Videoströme auf einer gemeinsamen Ähnlichkeit zwischen Paketgrößenverteilungen und Paketzwischenankunftszeiten basiert; Zuordnen für die genannten detektierten Videoströme von unterschiedlichen Prioritätsebenen gemäß dem Videodienstanbieter; und Anweisen des genannten Netzwerkrouters, um die genannten detektierten Videoströme vis-a-vis anderen Datenströmen in Übereinstimmung mit den genannten Prioritätsebenen zu priorisieren.

2. Das Verfahren gemäß Anspruch 1 und ferner beinhaltend das Verwenden von Tiefenlernanalyse, um mindestens eines von Folgendem zu klassifizieren: die genannten summarischen Statistiken und die genannten detektierten Videoströme, und/oder ferner beinhaltend das Verwenden von vielfältigem Lernen und Diffusionskarten, um mindestens eines von Folgendem zu klassifizieren: die genannten summarischen Statistiken und die genannten detektierten Videoströme.

3. Das Verfahren gemäß einem der Ansprüche 1-2, wobei:

die genannten summarischen Statistiken unter Verwendung von Tiefenlernanalyse klassifiziert werden; und
die genannten detektierten Videoströme unter Verwendung von vielfältigem Lernen und Diffusionskarten klassifiziert werden.

4. Das Verfahren gemäß einem der Ansprüche 1-3, wobei die genannten summarischen Statistiken auf dem Kürzeren von einer Minute oder der Länge von einem Gesamten des genannten Datenstroms basieren.

5. Das Verfahren gemäß einem der Ansprüche 1-4 und ferner Folgendes beinhaltend:
Produzieren eines Grund-Wahrheits-Datensatzes durch manuelles Erzeugen von Proben der genannten Informationen, wobei die genannten erzeugten Proben für den genannten Videodienstanbieter repräsentativ sind:

Projizieren der genannten Proben in eingebettetem Raum, um eingebettete Proben zu bilden; Identifizieren von Anwendungsclustern basierend auf den eingebetteten Proben; Projizieren einer neuen, nicht etikettierten Probe in dem genannten eingebetteten Raum; und Verwenden von mindestens einem von einem Random-Forest-Algorithmus oder k-NN-Algorithmus (k-Nächster-Nachbar-Algorithmus), um die genannte neue, nicht etikettierte Probe in Übereinstimmung mit ihrer Nähe zu einem Schwerpunkt für einen der genannten Anwendungscluster zu klassifizieren.

6. Das Verfahren gemäß einem der Ansprüche 1-5, wobei die genannten Informationen mindestens einen Merkmalsvektor unter Verwendung von mindestens einer der folgenden Verkehrsstromeigenschaften beinhalten: Gesamtzahl Bytes, Gesamtzahl Pakete oder Stromdauer.

7. Das Verfahren gemäß einem der vorhergehenden Ansprüche, wobei die genannten Videoströme verschlüsselt sind.

8. Eine Computervorrichtung (200), die Folgendes beinhaltet:
mindestens einen Prozessor, der konfiguriert ist, um alle Schritte gemäß dem Verfahren nach einem der vorhergehenden Ansprüche durchzuführen.

## Revendications

1. Procédé de classification de flux de trafic vidéo, mis en oeuvre sur un dispositif informatique et comprenant :

la réception (340) de données de flux grossières depuis un routeur de réseau, lesdites données de flux grossières comprenant des statistiques sommaires de flux de données sur ledit routeur ;
la classification (350) desdites statistiques sommaires pour détecter des flux vidéo provenant desdits flux de données ;
la demande (365) de données de flux fines auprès dudit routeur de réseau pour chacun desdits flux vidéo détectés, dans lequel lesdites données de flux fines comprennent un horodatage et une taille de paquet pour chaque paquet ;
la réception (370) desdites données de flux fines depuis ledit routeur de réseau ;
la classification (390) de chacun desdits flux vidéo détectés par fournisseur de services vidéo conformément auxdites informations, la classification desdits flux vidéo détectés étant basée sur une similarité conjointe entre des distributions de tailles de paquets et des temps d'inter-arrivée de paquets ;
l'assignation auxdits flux vidéo détectés de différents niveaux de priorité conformément au fournisseur de services vidéo ; et
l'instruction audit routeur de réseau de prioritiser lesdits flux vidéo détectés par rapport à d'autres flux de données conformément auxdits niveaux de priorité.

2. Procédé selon la revendication 1 et comprenant en outre l'utilisation d'une analyse d'apprentissage profond pour classifier au moins un : desdites statistiques sommaires et desdits flux vidéo détectés et/ou comprenant en outre l'utilisation de cartes d'apprentissage à réduction de dimensionnalité (Manifold learning) et de diffusion pour classifier au moins un : desdites statistiques sommaires et desdits flux vidéo détectés.

3. Procédé selon n'importe laquelle des revendications 1 et 2 dans lequel :

lesdites statistiques sommaires sont classifiées à l'aide d'une analyse d'apprentissage profond ; et
lesdits flux vidéo détectés sont classifiés à l'aide de cartes d'apprentissage à réduction de dimensionnalité (Manifold learning) et de diffusion.

**4.** Procédé selon n'importe laquelle des revendications 1 à 3 dans lequel lesdites statistiques sommaires sont basées sur la plus courte d'une minute ou de la longueur d'un dit flux de données complet.

**5.** Procédé selon n'importe laquelle des revendications 1 à 4 et comprenant en outre :

la production d'un ensemble de données de réalité du terrain en générant manuellement des échantillons desdites informations, dans lequel lesdits échantillons générés sont représentatifs dudit fournisseur de services vidéo ; la projection desdits échantillons générés dans un espace intégré pour former des échantillons intégrés ; l'identification de grappes d'application en fonction desdits échantillons intégrés ; la projection d'un nouvel échantillon non étiqueté dans ledit espace intégré ; et utilisant au moins un d'une forêt aléatoire ou d'un algorithme k-NN (des k plus proches voisins) pour classifier ledit nouvel échantillon non étiqueté conformément à sa proximité à un centre d'une desdites grappes d'application.

**6.** Procédé selon n'importe laquelle des revendications 1 à 5 dans lequel lesdites informations comprennent au moins un vecteur caractéristique utilisant au moins une des propriétés de flux de trafic suivantes : total d'octets, total de paquets, ou durée de flux.

**7.** Procédé selon n'importe laquelle des revendications précédentes dans lequel lesdits flux vidéo sont cryptés.

**8.** Dispositif informatique (200) comprenant : au moins un processeur configuré pour mettre en oeuvre toutes les étapes conformément au procédé selon l'une quelconque des revendications précédentes.

FIG. 1A

FIG. 1B

FIG. 2

FIG. 3

START

410 — RECEIVE INPUT DATA

400

420 — CONSTRUCT PSD AND IAT HISTOGRAMS

430 — DETERMINE JOINT SIMILARITY BETWEEN IAT AND PSD DISTRIBUTION

FIG. 4

440 — CONSTRUCT DATA ADJACENCY MATRIX

450 — CONSTRUCT LAPLACIAN MATRIX

460 — COMPUTE EIGENMAP

470 — EMBED NEW SAMPLE TO CLASSIFY

END

NETFLIX IAT

FIG. 5A

NETFLIX PSD

FIG. 5B

FIG. 5C

LOVEFILM IAT

SAMPLES=247

DELAY [ms]

FIG. 5D

LOVEFILM PSD

SAMPLES=33581

PACKETS SIZE [BYTES]

YOUTUBE IAT

SAMPLES=248

FIG. 5E

YOUTUBE PSD

SAMPLES=33768

FIG. 5F

HULU IAT

FIG. 5G

HULU PSD

FIG. 5H

EP 3 275 124 B1

METACAFE IAT

SAMPLES=125

DELAY [ms]

FIG. 5I

METACAFE PSD

SAMPLES=20572

PACKETS SIZE [BYTES]

FIG. 5J

FIG. 5K

EP 3 275 124 B1

DAILYMOTION

FIG. 5L

## FIG. 6

EP 3 275 124 B1

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2262173 A
- CN 102394827

- US 2010217886 A

**Non-patent literature cited in the description**

- **DARIO ROSSI et al.** Fine-grained traffic classification with netflow data. *International Wireless Communications and Mobile Computing Conference,* 2010, 479